# EUROPÄISCHE PATENTANMELDUNG

(11) **EP 0 694 783 A2**
(43) Veröffentlichungstag der Anmeldung: **31.01.1996**
(21) Anmeldenummer: 95108424.3
(22) Anmeldetag: 01.06.1995
(51) Int. Cl.: G01N 27/66

(54) **Photoionisationsdetektor für gasanalytische Geräte (PID)**

(30) Priorität: 01.06.1994 RU 94020029
(71) Anmelder: AUERGESELLSCHAFT GMBH, D-12059 Berlin (DE)
(72) Erfinder: Budovich, Vitali Lwowich, 123182 Moskau (RU); Shishazkaya, Ludmilla Petrovna, 197373 St. Petersburg (RU); Michailov, Alexeji Anatoljevich, 123373 Moskau (RU); Polotnyuk, Elena Boruchovna, 140011 Lubertsy (RU); Simonov, Igor Wassiljevitch, 115563 Moskau (RU); Herrmann, Frank Peter, 12461 Berlin (DE)

(57) **Zusammenfassung**

Die Erfindung betrifft das Gebiet des analytischen Gerätebaus, insbesondere das der Photoionisationsdetektoren für die Gasanalysenmeßtechnik.

Die Aufgabe der Erfindung besteht in der Gestaltung eines Photoionisations-detektors, der die Möglichkeiten der Detektion der Komponenten eines zu analysierenden Gasgemisches gewährleistet.

Die genannte Aufgabe wird dadurch gelöst, daß in einem Photoionisationsdetektor für ein Gasanalysengerät, der aus einer UV-Lampe mit einem Fenster für den Strahlenaustritt, einer Ionisationskammer, die gegenüber dem Fenster der UV-Lampe angeordnet ist und Sammel- und Polarisationselektroden besitzt, und aus Zuführungs- und Ableitungsstutzen für das zu analyiserende Gas, die mit dem Eingangs- und Ausgangsteil der Ionisationskammer verbunden sind, besteht, erfindungsgemäß in der UV-Lampe mindestens ein optisches Filter angeordnet, dessen Durchlaßcharakteristik für die Strahlung sich von denen des Lampenfensters unterscheidet, das an der inneren Oberfläche des Lampenfensters gelegen ist und einen Teil der Fläche des Lampenfensters überdeckt, und die Ionisationskammer mit mindestens einer zusätzlichen Sammelelektrode ausgerüstet ist, wobei eine der Sammelelektroden im Eingangsteil der Ionisationskammer installiert ist, der mit dem Zuführungsstutzen für das zu analysierende Gas verbunden und gegenüber dem vom optischen Filter überdeckten Teil des Lampenfensters gelegen ist, eine zweite Sammelelektrode im Ausgang der Ionisationskammer installiert ist, der mit dem Abführungsstutzen für das zu analysierende Gas verbunden und gegenüber dem vom optischen Filter freien Teil des Lampenfensters gelegen ist.

## Beschreibung

Die Erfindung betrifft das Gebiet des analytischen Gerätebaus, insbesondere das der Photoionisationsdetektoren für die Gaschromatographie.

Bekannt sind Photoionisationsdetektoren für gasanalytische Apparaturen, die eine UV-Lampe mit einem Fenster für den Strahlenaustritt, eine Ionisationskammer, die gegenüber dem Fenster der UV-Lampe angeordnet ist und eine Sammel- und polarisierende Elektrode besitzen, und Stutzen für die Zuführung und Ableitung des zu analysierenden Gases enthalten (s. USA-Patent Nr. 401 3913, Kl. 313-243, 1978, UdSSR-Urh.-Schein Nr. 1444 659). Diese Detektoren besitzen eine hohe Empfindlichkeit und eine definierte Selektivität für die Komponenten des zu analysierenden Gases mit einer niedrigeren Ionisationsenergie als die Energie der von der Lampe abgestrahlten Photonen (< 11,8 eV). Jedoch ist die Selektivität dieser Detektoren nicht ausreichend zur Detektion der zu analysierenden Komponenten in einem nicht aufgetrennten Gasgemisch. Darüber hinaus besitzen diese Detektoren ein vergleichsweise großes Ionisationskammervolumen, was ihre Anwendung in der Kapillargaschromatographie begrenzt.

Die Aufgabe der Erfindung besteht in der Gestaltung eines Photoionisationsdetektors, der die Möglichkeit der Einzelkomponenten-Detektion eines zu analysierenden Gasgemisches gewährleistet.

Die genannte Aufgabe wird dadurch gelöst, daß in einem Photoionisationsdetektor für ein Gasanalysengerät, der aus einer UV-Lampe mit einem Fenster für den Strahlenaustritt, einer Ionisationskammer, die gegenüber dem Fenster der UV-Lampe gasdicht angeordnet ist und die ein Elektrodensystem, bestehend aus Sammel- und Polarisationselektrode, besitzt, und aus Zu- und Ableitungsstutzen für das zu analysierende Gas, die mit dem Eingangs- und Ausgangsteil der Ionisationskammer verbunden sind, besteht, erfindungsgemäß in der UV-Lampe mindestens ein optisches Filter angeordnet ist, dessen Durchlaßcharakteristik für die eintretende Strahlung sich von der des Lampenfensters unterscheidet, das sich an der inneren Oberfläche des Lampenfensters befindet und einen Teil der Fläche des Lampenfensters überdeckt, und die Ionisationskammer mit mindestens einer zusätzlichen Sammelelektrode ausgerüstet ist.

In einer Vorzugsvariante der Realisierung des Detektors ist eine der Sammelelektroden im Eingangsteil der Ionisationskammer installiert, der mit dem Zuführungsstutzen für das zu analysierende Gas verbunden und gegenüber dem vom optischen Filter überdeckten Teil des Lampenfensters gelegen ist. Eine zweite Sammelelektrode ist im Ausgangsteil der Ionisationskammer installiert, der mit den Abführungsstutzen für das zu analysierende Gas verbunden und gegenüber dem nicht vom optischen Filter überdeckten Teil des Lampenfensters gelegen ist.

Eine andere Ausführungsvariante arbeitet mit zwei Filtern, die unterschiedliche Durchlaßcharakteristika für die UV-Strahlung besitzen, an der inneren Oberfläche des Lampenfensters angeordnet sind und verschiedene Teile des Lampenfensters überdecken. In dieser Ausführungsvariante des Detektors hat die Ionisationskammer drei Elektrodenpaare. Jeweils eine Elektrode dieser Paare übt die Funktion einer Polarisationselektrode, die andere die einer Sammelelektrode aus. Ein Elektrodenpaar ist im Eingangsteil der Ionisationskammer angeordnet, der mit dem Zuführungsstutzen für das zu analysierende Gas verbunden und gegenüber dem vom ersten optischen Filter überdeckten Fensterteil der Lampe positioniert ist. Ein zweites Elektrodenpaar ist im Mittelteil der Ionisationskammer angeordnet, der gegenüber dem vom zweiten optischen Filter überdeckten Fensterteil gelegen ist. Das dritte Elektrodenpaar ist im Ausgangsteil der Kammer angeordnet, der mit dem Abführungsstutzen das zu analysierenden Gases verbunden und gegenüber dem vom Filter freien Fensterteil der Lampe gelegen ist.

Bei den genannten Besonderheiten der Ausführung des Detektors existieren in der Ionisationskammer des Detektors mindestens zwei Zonen mit unterschiedlichen Ionisationsbedingungen für die Komponenten des zu analysierenden Gases, die die Möglichkeit der Detektion der Gemischkomponenten in Relation zu den Signalen gewährleisten, die von den zwei Sammelelektroden abgegriffen werden, die in Zonen mit verschiedenen Ionisationsbedingungen angeordnet sind.

Das Wesen der Erfindung wird in den nachfolgenden Zeichnungen näher erläutert.
- In Fig. 1: sind der erfindungsgemäße Detektor im Längsschnitt und die Ionisationskammer im Schnitt A-A dargestellt.
- In Fig. 2: ist ein Querschnitt der Ionisationskammer mit drei Elektrodenpaaren dargestellt.

Der Photoionisationsdetektor enthält die UV-Lampe (1), z.B. mit einer Wasserstoffüllung, mit einem aus Magnesiumfluorid bestehenden Fenster (29) für den Austritt der UV-Strahlung. Unmittelbar am Fenster (2) der UV-Lampe (1) schließt sich die Ionisationskammer (3) an. In der UV-Lampe (1) ist das optische Filter (4) angeordnet, der zum Fenster (2) eine unterschiedliche Durchlaßcharakteristik für die UV-Strahlung besitzt. Das Filter (4) ist in der UV-Lampe (1) an der inneren Fensteroberfläche angeordnet und überdeckt einen Teil der Fläche des Fensters (2) im Innern des Entladungsrohres (5), das sich innerhalb der UV-Lampe (1) befindet. Das zweite Entladungsrohr (6) befindet sich ebenfalls innerhalb der UV-Lampe (1), und zwar gegenüber dem vom Filter freien Teil des Fensters (2). Die Elektroden (7), (8) und (9) der Entladungsrohre (5, 6) sind aus dem Glasgehäuse (10) der UV-Lampe (1) herausgeführt. Auf dem oberen Teil des Glasgehäuses (10) ist eine fluorbeschichtete Buchse (11) aufgesetzt. Die Ionisationskammer (3) besitzt ein zylindrisches Metallgehäuse (12) und die Stutzen (13) und (14) für die Zuführung und Ableitung des zu analysierenden Gases. Das innere Volumen des Gehäuses (12) ist ausgefüllt mit einem fluorbeschichteten Einsatz (15), in dessen mittlerem Teil sich entlang der Achsen der Stutzen (13, 14) ein Durchlaß befindet, der das innere Arbeitsvolumen (16) der Ionisationskammer (3) bildet. Die Kanäle (17, 18) bilden das innere Arbeitsvolumen (16) der Ionisationskammer (3) mit den Stutzen (13, 14). Im inneren Arbeitsvolumen (16) der Kammer (3) sind zwei polarisierende Elektroden (19, 20) und zwei Sammelelektroden (21, 22) angeordnet. Die Polarisationselektrode (19) und die Sammelelektrode (21) liegen sich im Eingangsteil des inneren Volumens (16) der Ionisationskammer (3) gegenüber, der mit dem Stutzen (13) für die Zuführung des zu analysierenden Gases verbunden und gegenüber dem von Filter (4) überdeckten Teil des Fensters (2) gelegen ist, so daß der Raum zwischen den Elektroden mit UV-Strahlen, die durch das optische Filter (4) und das Fenster (2) dringen, bestrahlt werden

Die Polarisationselektrode (20) und die Sammelelektrode (22) liegen sich im Ausgangsteil des inneren Volumens (16) der Ionisationskammer (3) gegenüber, der mit dem Stutzen (14) für die Abführung des zu analysierenden Gases verbunden und gegenüber dem vom Filter (4) freien Teils des Fensters (2) gelegen ist, so daß der Raum zwischen den Elektroden mit UV-Strahlen, die nur durch das Fenster (2) dringen, bestrahlt werden. Die Polarisationselektroden (19, 20) sind mit elektrischen Anschlüssen (23, 24) ausgerüstet, die mit der Stromversorgung (nicht dargestellt) verbunden sind. Die Sammelelektroden (21, 22) sind mit elektrischen Anschlüssen (25, 26) ausgerüstet, die mit elektrischen Meßgeräten (nicht dargestellt) verbunden sind. Die UV-Lampe (1) ist mit einem metallischen Schutzgehäuse versehen, das Öffnungen (28) für die Anschlüsse (29, 30, 31) der Elektroden (7, 8, 9) der UV-Lampe (1) besitzt. Das metallische Schutzgehäuse (27) ist mit dem metallischen Gehäuse (12) der Ionisationskammer (3) gasdicht verriegelt. Zwischen dem Gehäuse (27) und der fluorbeschichteten Buchse (11) befindet sich eine Feder (32), die UV-Lampe (1) gegen die Ionisationskammer (3) preßt. Für den gasdichten Abschluß des inneren Volumens der Ionisationskammer (3) hat sie eine Dichtung (33), die sich am Rand des Durchlasses im fluorbeschichteten Einsatz (15) befindet und den Kontakt des Einsatzes (15) mit dem Fenster (2) der UV-Lampe sichert.

### Der Detektor arbeitet folgendermaßen:

Das zu analysierende Gas tritt in den Detektor durch den Stutzen (13) ein, fließt durch das innere Arbeitsvolumen (16) der Ionisationskammer (3) und verläßt es durch den Kanal (17) und den Stutzen (14). Im Raum zwischen der Polarisationselektrode (19) und der Sammelelektrode (21) wird das zu analysierende Gas von der UV-Strahlung der UV-Lampe (1) ionisiert, die das Filter (4) und das Fenster (2) passiert hat. Im Raum zwischen der Polarisationselektrode (20) und der Sammelelektrode (22) wird das zu analysierende Gas von der UV-Strahlung ionisiert, die nur das Fenster (2) passiert hat und die eine höhere Photonenenergie besitzt als die im Raum zwischen den Elektroden (19, 21). Folglich werden im inneren Arbeitsvolumen (16) der Ionisationskammer (3) zwei Ionisationszonen mit verschiedenen Ionisationsbedingungen geschaffen. Die Sammelelektroden (21, 12) geben zwei Detektorsignale ab, die den unterschiedlichen Ionisationsbedingungen ein- und desselben zu analysierenden Gases entsprechen und die Informationen nicht nur über seine Eigenschatten, sondern auch über seine quantitative Zusammensetzung enthalten. Dergestalt wird die Aufgabe der Detektion der Komponenten des zu analysierenden Gases gelöst.

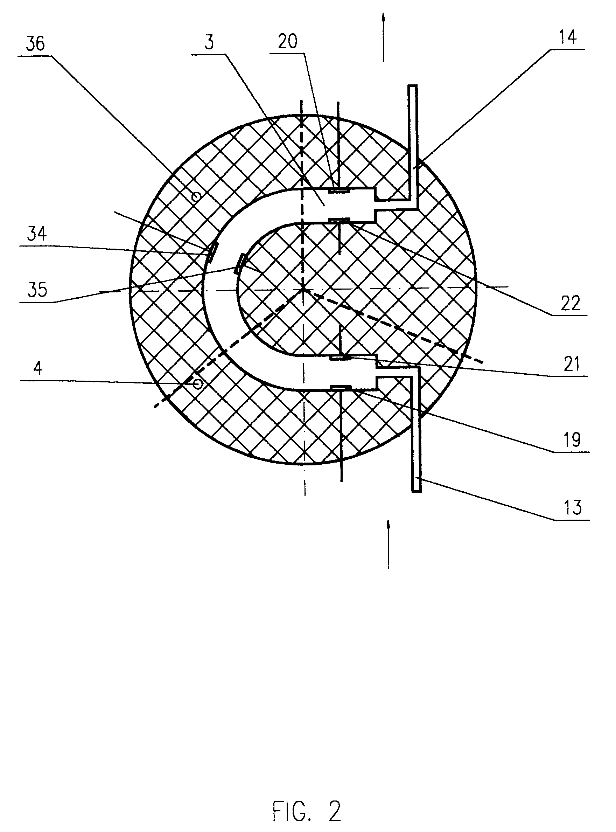

Die in Fig. 2 dargestellte Ausführungsvariante des Detektors unterscheidet sich von der oben beschriebenen dadurch, daß die Ionisationskammer (3) noch mit einem weiteren Elektrodenpaar ausgerüstet ist, und zwar mit der Polarisationselektrode (34) und der Sammelektrode (35), die im mittleren Teil der Ionisationskammer (3) angeordnet sind. Dementsprechend besitzt die UV-Lampe (1) ein zusätzliches optisches Filter (36), das eine Durchlaßcharakteristik für die UV-Strahlung besitzt, die sich von der des Filters (4) und des Fensters (2) unterscheiden. Folglich sind so im inneren Arbeitsvolumen (16) der Ionisationskammer (3) drei Ionisationszonen mit verschiedenen Ionisationsbedingungen vorhanden.

Die erste zwischen der Polarisationselektrode (19) und Sammelelektrode (21) im Eingangsteil der Ionisationskammer (3) gelegenen Ionisationszone wird dadurch charakterisiert, daß in ihr das zu analysierende Gas unter der Wirkung der UV-Strahlung ionisiert wird, die das optische Filter (4) und das Fenster (2) passiert hat.

Die zweite, zwischen der Polarisationselektrode (34) und der Sammelelektrode (35) im mittleren Teil des inneren Volumens (16) der Ionisationskammer (3) gelegenen Ionisationszone wird dadurch charakterisiert, daß in ihr das zu analysierende Gas unter der Wirkung der UV-Strahlung ionisiert wird, die das zusätzliche Filter (36) und das Fenster (2) passiert hat. Dabei wurden die Charakterisk des zusätzlichen Filters (36) so gewählt, daß ihn Photonen mit größerer Energie als die des Filters (4) passieren.

Die dritte, zwischen der Polarisationselektrode (20) und der Sammelelektrode (22) im Ausgangsteil der Ionisationskammer (3) gelegene Ionisationszone wird dadurch bestimmt, daß in ihr das zu analysierende Gas unter der Wirkung der UV-Strahlung ionisiert wird, die nur das Fenster (2) transmittieren und Photonen mit einer Energie enthält, die größer ist als die der Photonen nach dem Filter (4) und dem Filter (36).

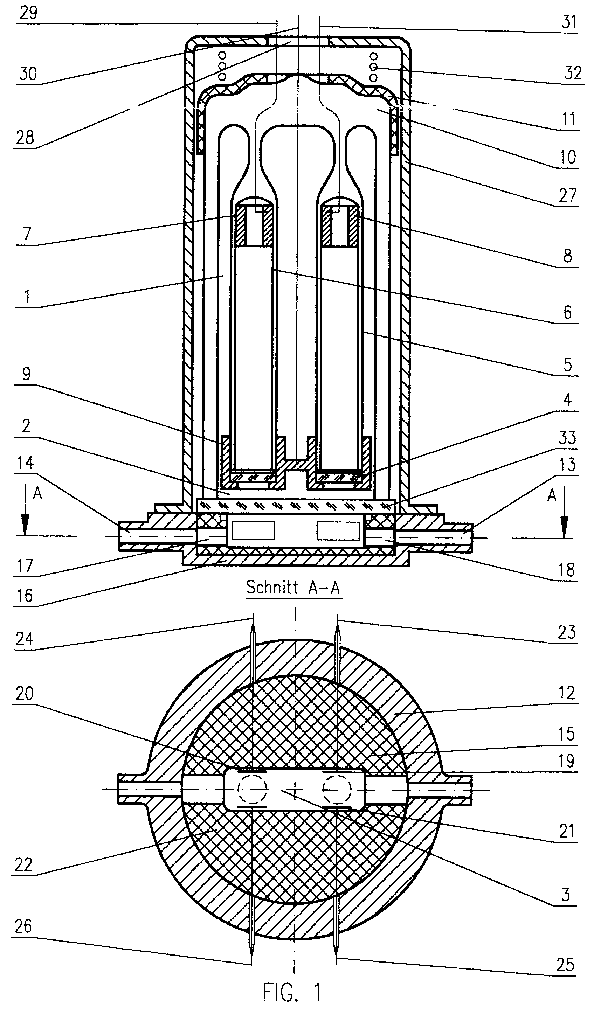

Die Ausführungsvariante entsprechend Fig. 2 arbeitet in Analogie zur weiter oben beschriebenen Variante nach Fig. 1. Der Unterschied besteht darin, daß durch die drei Ionisationszonen, die zwischen den entsprechenden Paaren von Polarisationselektroden und Sammelelektroden gelegen sind und die unterschiedliche Ionisationsbedingungen besitzen, der Detektor drei Signale formiert, die Informationen über die qualitative und quantitative Zusammensetzung des Gasgemisches enthalten. Dies erweitert die Detektionsmöglichkeiten für die Komponenten des zu analysierenden Gasgemisches.

Mit Hilfe der vorliegenden Ausführungsvariante des Photoionisationsdetektors wurde ein Gasgemisch, bestehend aus den drei Komponenten Benzol, Toluol und Xylol, analysiert, was bisher nur mit Hilfe einer chromatographischen Vortrennung ermöglicht werden konnte.

Im erfindungsgemäßen Detektor kann eine große Anzahl optischer Filter mit unterschiedlichen Durchlaßcharakteristiken für die UV-Strahlung eingesetzt werden. Z.B. können in einer UV-Lampe drei optische Filter aus Kalziumfluorid, Bariumfluorid und Saphir mit verschiedenen Charakteristiken angeordnet werden, die 3/4 der Fensterfläche der Lampe überdecken. In diesem Fall können im Kanal der Ionisationskammer sogar vier Ionisationszonen mit verschiedenen Ionisationsbedingungen ausgebildet werden. Zu jeder Zone gehört das dazugehörende Paar Elektroden, die das Signal proportional der Ionisation der Komponenten des zu analysierenden Gasgemisches in dieser Zone formieren. Das erweitert noch zusätzlich die Möglichkeit des Detektors bei der Lösung der Aufgabe der Detektion von Komponenten des zu analysierenden Gasgemisches.

In der Eigenschaft als UV-Lampe können verschiedene Lampentypen verwendet werden. Beispielsweise können Lampen mit Wasserstoffüllung verwendet werden, in denen sich die Entladung im inneren Volumen der Lampe durch ein spezielles Elektrodensystem formiert, an dem eine Spannung von 300 - 500 V anliegt. In dem Falle, wenn in der Lampe mehrere Filter verwendet werden, die einen Teil der Fensteroberfläche der Lampe überdecken, wird gegenüber jedem Filter bei der Anfertigung der Lampe ein eigenes Elektrodensystem installiert, das die Entladung formiert.

## Patentansprüche

1. Photoionisationsdetektor für gasanalytische Geräte, der eine UV-Lampe mit einem Fenster für den Strahlenaustritt, eine Ionisationskammer, die gegenüber dem Fenster der UV-Lampe angeordnet ist und eine Sammel- und Polarisationselektrode besitzt, und Stutzen, die mit dem Eingangs- und Ausgangsteil der Ionisationskammer verbunden sind, für die Zu- und Ableitung des zu analysierenden Gases enthält, dadurch gekennzeichnet, daß in der UV-Lampe mindestens ein optisches Filter angeordnet ist, dessen Durchlaßcharakteristik für die Strahlung sich von denen des Lampenfensters unterscheidet, das an der inneren Oberfläche des Lampenfensters gelegen ist und einen Teil der Fläche des Lampenfensters überdeckt, und daß die Ionisationskammer mit mindestens einer zusätzlichen Sammelelektrode versehen ist.

2. Photoionisationsdetektor nach Anspruch 1, dadurch gekennzeichnet, daß eine der Sammelelektroden im Eingangsteil der Ionisationskammer installiert ist, der mit dem Zuführungsstutzen des zu analysierenden Gases verbunden und gegenüber dem vom optischen Filter überdeckten Teil des Lampenfensters gelegen ist, und daß sich eine zweite Sammelelektrode im Ausgangsteil der Ionisationskammer befindet, der mit dem Abführungsstutzen für das zu analysierende Gas verbunden und gegenüber dem nicht vom optischen Filter überdeckten Teil des Lampenfensters gelegen ist.

3. Photoionisationsdetektor nach Anspruch 1, dadurch gekennzeichnet, daß die UV-Lampe zwei optische Filter mit unterschiedlichen Durchlaßcharakteristiken für die UV-Strahlung besitzt, die Filter an der inneren Oberfläche des Lampenfensters angebracht sind und verschiedene Teile des Lampenfensters überdecken.

4. Photoionisationsdetektor nach Anspruch 3, dadurch gekennzeichnet, daß die Ionisationskammer drei Elektrodenpaare besitzt, daß eine Elektrode eines jeden Paares die Funktion der Polarisationselektrode ausübt und die andere Elektrode die der Sammelelektrode, dabei sind angeordnet ein Elektrodenpaar im Eingangsteil der Ionisationskammer, der mit dem Zuführungsstutzen für das zu analysierende Gas verbunden und gegenüber dem von einem optischen Filter überdeckten Fensterteil der Lampe gelegen ist, ein zweites Elektrodenpaar im Mittelteil der Ionisationskammer, das gegenüber dem vom zweiten optischen Filter überdeckten Fensterteil der Lampe gelegen ist, und ein drittes Elektrodenpaar im Ausgangsteil der Ionisationskammer, der mit dem Stutzen für die Abführung des zu analysierenden Gases verbunden und gegenüber dem vom Filter freien Fensterteil gelegen ist.
